# EUROPÄISCHE PATENTANMELDUNG

(11) **EP 0 893 630 A2**
(43) Veröffentlichungstag der Anmeldung: **27.01.1999**
(21) Anmeldenummer: 98109103.6
(22) Anmeldetag: 19.05.1998
(51) Int. Cl.: F16J 15/08

(54) **Metallische Flachdichtung**

(30) Priorität: 22.07.1997 DE 19731489
(71) Anmelder: REINZ-DICHTUNGS-GMBH, 89233 Neu-Ulm (DE)
(72) Erfinder: Katzmaier, Hans, Dipl.-Ing. (FH), 89179 Beimerstetten (DE); Kögel, Alexander, Dipl.-Ing., 89231 Neu-Ulm (DE); Ludwig, Josef, 89168 Niederstotzingen (DE); Popielas, Frank, Dipl.-Ing., 89250 Senden (DE); Quick, Lothar, 89278 Nersingen (DE); Unseld, Günther, 89189 Neenstetten (DE); Weiss, Alfred, Dipl.-Ing. (FH), 89231 Neu-Ulm (DE)
(74) Vertreter: Tomerius, Isabel, Dr. Dipl.-Chem.

(57) **Zusammenfassung**

Die Erfindung betrifft eine metallische Flachdichtung (1), welche wenigstens eine Durchgangsöffnung (6) aufweist, die von einer Sicke (4) vollständig umschlossen ist, und in welcher in derselben Dichtungslage (2), die die Sicke (4) umfaßt, eine Abstützeinrichtung (3) für die Sicke (4) vorhanden ist. Die Abstützeinrichtung (3) wird durch eine Aufbiegung des die Durchgangsöffnung (6) umgebenden Dichtungsrandes in Richtung auf die Sickenwölbung mit einem Winkel (α) von maximal 90^{o} gebildet. Vorzugsweise ist die Blechstärke im Bereich der Abstützeinrichtung (3) gegenüber der Blechstärke der übrigen Dichtungslage erhöht.

## Beschreibung

Die Erfindung betrifft eine metallische Flachdichtung und insbesondere eine Zylinderkopfdichtung oder Auspuffdichtung, bei welcher das Austreten heißer Verbrennungsgase über einen langen Zeitraum sicher verhindert werden muß.

Im Falle von Zylinderkopfdichtungen sind neben den Brennraumöffnungen auch Kühl- und Wasserdurchgänge abzudichten. Besonders hohe Anforderungen in bezug auf die Dichtigkeit stellen jedoch die Bereiche um die Brennraumöffnungen, da hier wegen des hohen Drucks der Verbrennungsgase, der hohen Temperatur und der ständigen Dichtspaltänderungen eine besonders flexible Anpassung der Dichtung an die wechselnden Bedingungen erforderlich ist, ohne daß eine vorzeitige Materialermüdung auftritt.
Eine Schwierigkeit besteht weiter darin, daß es nicht möglich ist, eine Zylinderkopfdichtung so zwischen Motorblock und Zylinderkopf einzuspannen, daß eine vollkommen ebene Dichtungsfläche erhalten wird. Beim Befestigen des Zylinderkopfes auf dem Motorblock wird der Zylinderkopf im Bereich der Zylinderkopfschrauben nach unten, in Richtung auf den Motorblock gezogen. Dadurch entsteht in der Dichtung eine Topographie. Der Abstand des Zylinderkopfes vom Motorblock ist umso größer, je weiter man sich von den Befestigungsbolzen oder -schrauben entfernt und sich innerhalb dieser befindet. Wenn die Bolzen, wie üblich, nahe um die Brennraumdurchgänge angeordnet sind, um hier für eine gute Abdichtung zu sorgen, entsteht zwischen Motorblock und Zylinderkopfdichtung im Bereich der Brennraumdurchgänge eine Art von kissen- oder tonnenförmigem Gewölbe, bei dem die Bolzen den tragenden Säulen oder Pfeilern des Gewölbes vergleichbar sind. Im Unterschied zu einem Deckengewölbe sind die Räume oberhalb der Brennraumöffnungen jedoch nicht statisch, sondern der Dichtspalt ändert sich mit den Verbrennungszyklen. Die Dichtungsränder stehen dagegen von den Bolzen nach aussen hin keilförmig auf. Auch diese Bereiche sind bei einer eingebauten Dichtung nicht vollständig starr, sondern bewegen sich während des Betriebs auf und ab. Diese Bewegungen werden hebelartig in das Innere der Dichtung übertragen, wobei die Hebelpunkte in etwa im Bereich der Verbindungslinien zwischen benachbarten Bolzenlöchern liegen. Bewegungen der Dichtungsrandbereiche setzen sich also in das Innere der Dichtung fort und erschweren die Abdichtung der Brennraumdurchgänge zusätzlich.

Um trotz der genannten Schwierigkeiten für eine zuverlässige Abdichtung im Brennraumbereich zu sorgen, hat sich bei Zylinderkopfdichtungen ein Konzept bewährt, das im folgenden als "Zwei-Linien-Konzept" bezeichnet werden soll. Die erste Dichtungslinie befindet sich dabei unmittelbar im Randbereich der Dichtung um die jeweilige Brennraumöffnung. Die zweite Dichtungslinie verläuft mit größerem Abstand von der Brennraumöffnung um die erste Dichtungslinie herum. Dichtungen, die dieses Konzept verwirklichen, sind beispielsweise aus der EP-A-0 230 804 und der EP-A-0 306 766 bekannt. Als zweite Dichtungslinie sind jeweils in durch wenigstens ein Zwischenblech getrennten Deckblechen ausgebildete Sicken vorhanden, deren Scheitelpunkte auf gegenüberliegenden Seiten der Zwischenbleche aufliegen. Um ein vollständiges Abflachen der Sicken während des Betriebs zu verhindern und die Elastizität der Sicken dauerhaft zu erhalten, ist am Brennraumrand der Dichtung ein "Stopper-Bereich" als erste Dichtungslinie ausgebildet. Der Stopper-Bereich entsteht durch Umfalzen eines Zwischenblechs auf sich selbst (EP-A-0 306 766) oder durch Umfalzen eines Zwischenblechs um ein auf dem Zwischenblech angeordnetes Distanzblech (EP-A-0 230 804). Während die Sicken der zweiten Dichtungslinie also die elastische Anpassung der Dichtung an die Druck- und Temperaturschwankungen im Bereich um die Brennraumöffnungen sicherstellen, verhindert der Stopper-Bereich der ersten Dichtungslinie, daß heiße Brenngase unmittelbar auf die Sicken einwirken und die Sicken vollständig abgeflacht werden und so ihre Elastizität einbüßen.

In den beschriebenen Dichtungen wird diese Zwei-Linien-Abdichtung erreicht, indem die verschiedenen Dichtfunktionen auf verschiedene Blechlagen einer Mehrlagen-Dichtung verteilt werden. Dadurch wird die Herstellung der Dichtungen aufwendig und teuer.

**Aufgabe** der Erfindung ist es, eine metallische Flachdichtung anzugeben, die einfach aufgebaut sowie leicht und kostengünstig herstellbar ist, dabei aber trotzdem für eine zuverlässige und dauerhafte Abdichtung sorgt. Die erfindungsgemäße Dichtung soll sich insbesondere für die Verwendung als Zylinderkopfdichtung eignen.

Die Lösung der Aufgabe gelingt mit der Flachdichtung gemaß Anspruch 1. Weitere Ausführungsformen ergeben sich aus den Unteransprüchen. Die Erfindung betrifft weiterhin ein Verfahren zur Herstellung dieser Dichtung gemäß Anspruch 22.

Die Erfindung betrifft also eine metallische Flachdichtung, welche wenigstens eine Durchgangsöffnung aufweist, die von einer Sicke vollständig umschlossen ist. Radial innerhalb dieser Sicke, also näher an der Durchgangsöffnung, ist für die Sicke eine Abstützeinrichtung vorgesehen, die im eingebauten Zustand der Dichtung ein vollständiges Abflachen der Sicke verhindert.
Diese Abstützeinrichtung wird dadurch erhalten, daß der die Durchgangsöffnung umgebende Dichtungsrand in Richtung auf die Sicke hin aufgebogen wird. Der Biegewinkel zwischen aufgebogenem Dichtungsrand und Dichtungsebene zur Seite der Dichtungsöffnung hin beträgt dabei maximal 90^{o}.

Die Stützwirkung der Abstützeinrichtung auf die Sicke kann durch die Einstellung der Neigung gezielt gesteuert werden. Eine besonders starke Abstützung wird bei einem Biegewinkel von 90^{o} erzielt. Hier ist die Abstützeinrichtung im wesentlichen nur noch plastisch und nicht mehr elastisch verformbar. Neben der Stützfunktion übernimmt die Abstützeinrichtung auch Abdichtfunktion für die Durchgangsöffnung und verhindert, daß Gas oder Flüssigkeit aus der Durchgangsöffnung direkt auf die hinter der Abstützeinrichtung liegende Sicke einwirkt.

Um die beschriebene Stütz- und Abdichtfunktion in hinreichendem Maße entfalten zu können, ist der umgebogene Dichtungsrand zweckmäßig so lang, daß er im Einbauzustand der Dichtung an beiden abzudichtenden Gegenflächen anliegt. Bei einem Biegewinkel von 90^{o} entspricht die Höhe der Abstützeinrichtung also bevorzugt im wesentlichen der Höhe des abzudichtenden Dichtspaltes, während die Abstützeinrichtung bei einem Biegewinkel von unter 90^{o} zweckmäßig länger ist und sich hier elastisch dem Dichtspalt anpaßt.

In einer Weiterbildung der Erfindung ist der Randbereich der Abstützeinrichtung von der Sicke weggebogen. Beispielsweise kann der Randbereich bogenförmig in Richtung auf die Dichtungsebene hin zurückgekrümmt sein. Alternativ ist es möglich, den Randbereich so umzubiegen, daß er im wesentlichen parallel zur Dichtungsebene verläuft. Die Abstützeinrichtungen sind dann also Halbsicken vergleichbar. Formgebung und Breite des Randbereichs richten sich zweckmäßig nach dem jeweils abzudichtenden Gegenstand und den vorgefundenen Abdichtungsanforderungen.

Von Vorteil wird auch die Ausgestaltung der Sicke den vorgefundenen Bedingungen entsprechend angepaßt, so daß zwischen Abstützeinrichtung und Sicke eine optimale Abstimmung erreicht wird. Die Einstellung der Rückfederungseigenschaften der Sicke erfolgt auf an sich bekannte Weise, z.B. durch Variation der Formgebung, Sickenbreite, -höhe und Steilheit sowie über die Materialwahl. Die Ausgestaltung der Sicke ist nicht auf spezielle Ausführungsformen des Standes der Technik beschränkt. Beispielsweise kann die Sicke sowohl rund als auch eckig ausgebildet sein, wobei letztere Variante bevorzugt ist, wenn eine hohe Federkonstante erreicht werden soll. Außerdem kann die Sicke grundsätzlich sowohl symmetrisch als auch asymmetrisch gestaltet sein. Die Sicke kann also beispielsweise an ihrer der Durchgangsöffnung zugewandten Flanke steiler ansteigen als an der der Durchgangsöffnung abgewandten Flanke.

Zusätzlich lassen sich die plastischen und elastischen Eigenschaften der Sicke und/oder der Abstützeinrichtung dadurch beeinflußen, daß der Raum unter der Wölbung der Sicke und/oder im Bereich zwischen Abstützeinrichtung und Sicke ganz oder teilweise mit einem plastisch oder elastisch verformbaren Material angefüllt wird. Geeignete Füllmaterialien sind elastomere Kunststoffe oder metallische Materialien, insbesondere weiche Metalle wie beispielsweise Weicheisen. Auch federelastische Materialien wie eine oder mehrere Spiralen, Blatt- oder Wurmfeder, welche im Bereich der Sickenwölbung und/oder zwischen Sicke und Abstützeinrichtung eingelegt werden, so daß sie die abzudichtende Durchgangsöffnung ganz oder teilweise umlaufen, können verwendet werden.

Um eine besonders gute Anpassung der Sicke und der Abstützeinrichtung an die vorstehend beschriebene dreidimensionale Aufwölbung der Dichtung im Einbauzustand zu erreichen, werden Sicke und/oder Abstützeinrichtung zweckmäßig in Umfangsrichtung profiliert. Zweckmäßig nimmt also die Rückfederkraft von Abstützeinrichtung und/oder Sicke mit zunehmendem Abstand von den die Sicke umgebenden Bolzenlöchern zu. Dies kann auf an sich bekannte Weise z.B. durch eine Vergrößerung der Sickenhöhe, Verringerung der Sickenbreite oder erhöhte Steilheit erreicht werden. Entsprechend können die Höhe und Breite sowie die Steilheit der Abstützeinrichtung sich in Umfangsrichtung ändern. Im Falle von Zylinderkopfdichtungen liegt die Breite der Abstützeinrichtung vorzugsweise in einem Bereich von 1,5 bis 3 mm. Auch für die Füllmaterialien kann eine Profilierung in Umfangsrichtung vorgesehen sein.

Eine gezielte Einstellung der Verformbarkeit und Stützwirkung der Abstützeinrichtung ist zudem durch eine Materialanhäufung in diesem Bereich möglich. Beispielsweise kann die Blechstärke im Bereich der Abstützeinrichtung und insbesondere im unmittelbar an die Durchgangsöffnung angrenzenden Bereich gezielt vergrößert werden. Dies wird zweckmäßig durch Anstauchen des Dichtungsrandes im Bereich der Durchgangsöffnung erreicht. Zweckmäßig wird zunächst der Dichtungs-Randbereich um die Durchgangsöffnung angestaucht und anschließend die Abstützeinrichtung aus der Dichtungsebene heraus gebogen. Um eine gute Stützwirkung zu erzielen, wird die Verdickung vorzugsweise so erzeugt, daß sie sich über die Knicklinie hinaus in Richtung auf die Sicke und zweckmäßig bis etwa in den Bereich des Sickenfusses fortsetzt. Falls erforderlich, kann der Verformungsvorgang bei erhöhter Temperatur durchgeführt werden. Eine Erwärmung empfiehlt sich beispielsweise bei der Verwendung von Edelstahlfederblech als Dichtungsmaterial.

Die Materialverdickung im Bereich der Abstützeinrichtung erhöht deren Steifigkeit und verbessert deren Stützwirkung auf die Sicke. Zudem entstehen in den Bereichen, in denen die Stauchvorrichtung auf den Dichtungsrand auftrifft, schnabelförmige Verbreiterungen. Diese schnabelförmigen Verbreiterungen sind plastisch verformbar und sorgen im Einbauzustand der Dichtung für eine besonders gute Anpassung an die abzudichtenden Gegenflächen.

Abstützeinrichtung und Sicke können unmittelbar aufeinanderfolgend angeordnet sein. Bevorzugt sind sie jedoch voneinander beabstandet und durch einen im wesentlichen ebenen Abschnitt getrennt.

Die erfindungsgemäßen Dichtungen erlauben es, trotz ihres sehr einfachen Aufbaus Durchgangsöffnungen auch unter extremen Bedingungen, wie sie beispielsweise bei Brennraumöffnungen in Zylinderkopfdichtungen vorgefunden werden, effektiv und dauerhaft abzudichten. Die ausgezeichnete Dichtungswirkung wird bereits bei Dichtungen erreicht, die als Einlagendichtungen ausgebildet sind. Die Erfindung ist jedoch nicht auf einlagige Dichtungen beschränkt, sondern neben der Lage, welche Abstützeinrichtung und Sicke umfaßt, können eine oder mehrere weitere Dichtungslagen vorhanden sein. Beispielsweise kann wenigstens eine entsprechend der ersten Lage geformte weitere Lage parallel zur ersten Lage auf diese auflaminiert sein, wobei sich die metallischen Materialien der einzelnen Lagen voneinander unterscheiden können.

Eine weitere Möglichkeit besteht darin, eine zweite Lage spiegelbildlich zur ersten Lage aufzulaminieren. Außerdem können alle erfindungsgemäßen Dichtungen Zwischen- oder Distanzbleche umfassen, die dazu dienen, die Gesamtdicke der Dichtung dem abzudichtenden Spalt (z. B. zwischen Motorblock und Zylinderkopf) anzupassen.

Die erfindungsgemäßen Dichtungen sind zudem nicht auf Zylinderkopfdichtungen beschränkt, sondern eignen sich grundsätzlich für alle Bereiche, in denen Flachdichtungen zur Abdichtungen von Durchgangsöffnungen eingesetzt werden. Als weiteres Beispiel können Auspuffdichtungen genannt werden.

Zur Verbesserung der Mikroabdichtung kann es zweckmäßig sein, die erfindungsgemäße Dichtung zumindest auf ihren nach außen weisenden Oberflächen ganz oder teilweise zu beschichten. Eine derartige Beschichtung wird vorzugsweise bei Zylinderkopfdichtungen verwendet, während sie bei Auspuffdichtungen nicht unbedingt erforderlich ist. Geeignete Beschichtungsmaterialien sind beispielsweise Kunststoffe oder metallische Beschichtungen, wie sie allgemein im Stand der Technik üblich sind. Zweckmäßig werden insbesondere diejenigen Flächen beschichtet, die in Kontakt mit den abzudichtenden Gegenflächen kommen. Im Falle von Zylinderkopfdichtungen sind die als Gleitbeschichtung bekannten Beschichtungen bevorzugt, die beispielsweise aus Teflon oder Molybdänsulfid bestehen. Auch oberflächenstrukturierte Beschichtungen können verwendet werden.

Zur Vereinfachung der Herstellung ist es möglich, den Funktionsbereich der Dichtung, welcher Abstützeinrichtung und Sicke umfaßt, unabhängig vom restlichen Bereich der Dichtung als Einlageteil zu fertigen, der später in eine entsprechende Ausnehmung im restlichen Dichtungskörper eingesetzt wird. Zweckmäßig handelt es sich bei dem Einlageteil um einen Einlagering.

Die Erfindung soll im folgenden anhand einer Zeichnung am Beispiel von Zylinderkopfdichtungen näher beschrieben werden. Dabei zeigen schematisch
- Fig. 1 bis 4: Teil-Querschnitte durch eine erfindungsgemäße Dichtungen und
- Fig. 5: eine Teil-Draufsicht auf eine erfindungsgemäße Dichtung.

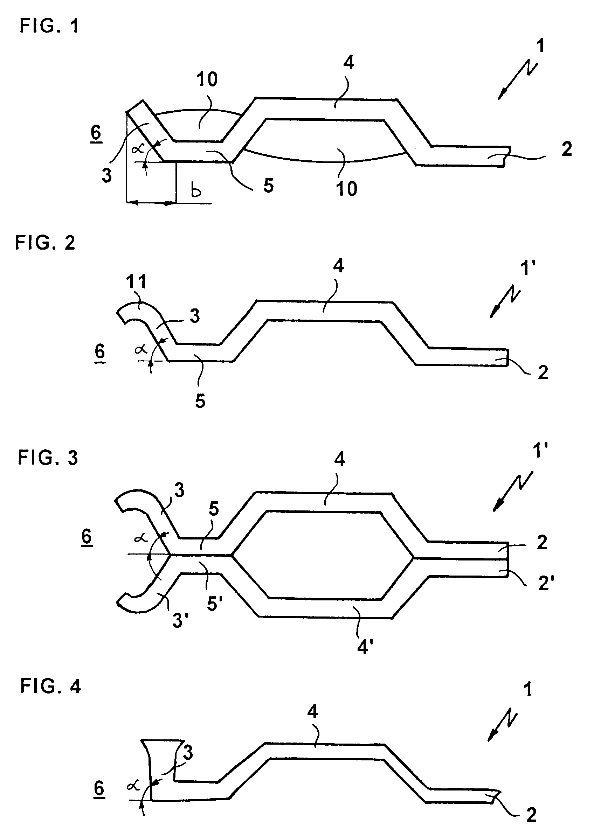

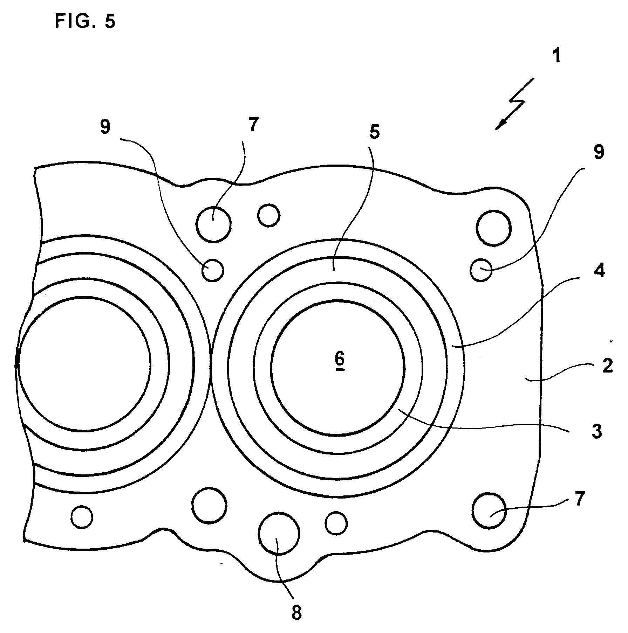

Im einzelnen zeigt Fig. 1 einen Teil-Querschnitt durch eine erfindungsgemäße Zylinderkopfdichtung 1, wie sie in Fig. 5 in Teil-Draufsicht gezeigt ist, im Bereich um eine Brennraumöffnung 6. Neben den Brennraumöffnungen 6 weist die Zylinderkopfdichtung Bolzenlöcher 7, Öl- 8 und Wasserdurchgänge 9 auf. Die abgebildete Dichtung 1 ist eine Einlagendichtung, welche nur eine metallische Dichtungslage 2 aufweist. Die Brennraumöffnungen 6 sind jeweils konzentrisch von einer Abstützeinrichtung 3 und einer Sicke 4 umgeben. Bei Dichtungen mit sehr eng beieinander liegenden Brennraumöffnungen 6 kann die Sicke 4, falls gewünscht, im Bereich zwischen zwei benachbarten Brennraumöffnungen 6 zu einer einzigen Sicke zusammenlaufen.

Die Abstützeinrichtung 3 wird dadurch erzeugt, daß der Dichtungsrand im Bereich um die Brennraumöffnung 6 mit einem Winkel α in Richtung auf die Sicke 4 aufgebogen wird. Zwischen Sicke 4 und Abstützeinrichtung 3 verbleibt dabei ein im wesentlichen ebener Abschnitt 5. Die Breite b der Abstützeinrichtung 3 beträgt im Falle einer Zylinderkopfdichtung beispielsweise etwa 0,5 bis 4 mm, insbesondere etwa 1,5 bis 3 mm. Zur Steuerung der Rückfederungseigenschaften von Abstützeinrichtung 3 und Sicke 4 ist im Bereich zwischen Abstützeinrichtung 3 und Sickenflanke sowie unterhalb der Wölbung der Sicke 4 Füllmaterial 10 eingebracht. Bei dem Füllmaterial 10 kann es sich um plastisch oder elastisch verformbare Materialien, handeln, also beispielsweise um Einlagen aus elastomerem Kunststoff oder Weichmetall.

Die folgenden Fig. 2 bis 4 zeigen weitere Ausführungsformen der erfindungsgemäßen Dichtung. Dabei bezeichnen gleiche Bezugszeichen gleiche Teile wie in Fig. 1.

In Fig. 2 ist erneut eine Dichtung gezeigt, welche den in Fig. 5 wiedergegebenen Grundaufbau besitzen kann. Im Unterschied zu der in Fig. 1 gezeigten Dichtung ist der Funktionsbereich, welcher Abstützeinrichtung 3 und Sicke 4 aufweist, hier jedoch als Einlagering 1' ausgebildet, der gesondert gefertigt und nachträglich in eine entsprechende Ausnehmung in der erfindungsgemäßen Dichtung eingesetzt werden kann. Im Unterschied zu der in Fig. 1 dargestellten Dichtung ist der Randbereich 11 der Abstützeinrichtung 3 bogenförmig in Richtung auf die Dichtungsebene zurückgekrümmt. Außerdem fehlen die Füllmaterial-Einlagen.

In Fig. 3 ist eine erfindungsgemäße Mehrlagendichtung wiedergegeben. Die einzelnen Lagen entsprechen den in Fig. 2 dargestellten. Die zweite Lage 2' ist spiegelbildlich unter der ersten Lage 2 angeordnet, so daß die Sicken 4 und 4' voneinander weg weisen.

In der Dichtung gemäß Fig. 4 ist die Blechstärke der Dichtungslage 2 im Bereich der Abstützeinrichtung 3 gegenüber dem restlichen Bereich der Dichtungslage 2 erhöht. Dies kann beispielsweise durch Anstauchen des Dichtungsrandes von der Durchgangsöffnung 6 her in Richtung auf die Sicke 4 hin erfolgen. Zweckmäßig wird der Dichtungs-Randbereich zuerst angestaucht, bevor die Abstützeinrichtung 3 um den Winkel α, hier 90^{o} abgewinkelt wird. Im Falle der in Fig. 4 gezeigten Dichtung ist die Abstützeinrichtung 3 im wesentlichen nur noch plastisch verformbar, besitzt aber kaum noch elastische Eigenschaften. Durch den Anstauchvorgang werden an den Rändern der Abstützeinrichtung 3 schnabelförmige Verformungen gebildet, die besonders leicht plastisch verformbar sind und so für eine besonders gute Anpassung der Abstützeinrichtung an die abzudichtende Gegenfläche sorgen. Weiter ist anzumerken, daß sich die Materialverdickung im Bereich der Abstützeinrichtung über die Knickstelle hin bis etwa in den Bereich des Fußes der Sicke 4 fortsetzt, so daß auch die Knickstelle durch die Materialverdickung stabilisiert wird.

Die erfindungsgemäßen Dichtungen gewährleisten trotz ihres sehr einfachen Aufbaus eine ausgezeichnete und dauerhafte Abdichtung von Durchgangsöffnungen, bei denen hohe Anforderungen an eine Abdichtung gestellt werden, wie dies bei Brennraumöffnungen von Zylinderkopfdichtungen der Fall ist.

## Patentansprüche

1. Metallische Flachdichtung (1), welche wenigstens eine Durchgangsöffnung (6) aufweist, die von einer Sicke (4) vollständig umschlossen ist, und in welcher in derselben Dichtungslage (2), die die Sicke (4) umfaßt, eine Abstützeinrichtung (3) für die Sicke (4) vorhanden ist,
dadurch **gekennzeichnet**,
daß die Abstützeinrichtung (3) durch eine Aufbiegung des die Durchgangsöffnung (6) umgebenden Dichtungsrandes in Richtung auf die Sickenwölbung mit einem Winkel (α) von maximal 90^{o} gebildet wird.

2. Metallische Flachdichtung gemäß Anspruch 1,
dadurch **gekennzeichnet**,
daß die Dichtungslage (2) im Bereich der Abstützeinrichtung (3) gegenüber ihren restlichen Bereichen eine größere Dicke aufweist.

3. Metallische Flachdichtung gemäß Anspruch 2,
dadurch **gekennzeichnet**,
daß sich der verdickte Bereich der Dichtungslage (2) bis zum Fußpunkt der Sicke (4) erstreckt.

4. Metallische Flachdichtung gemäß einem der Ansprüche 1 bis 3,
dadurch **gekennzeichnet**,
daß der Dichtungsrand in einem Winkel (**α**) von 90^{o} in Richtung auf die Sickenwölbung gebogen ist.

5. Metallische Flachdichtung gemäß einem der Ansprüche 1 bis 4,
dadurch **gekennzeichnet**,
daß der Randbereich (11) der Abstützeinrichtung (3) von der Sicke (4) weggebogen ist.

6. Metallische Flachdichtung gemäß Anspruch 5,
dadurch **gekennzeichnet**,
daß der Randbereich (11) der Abstützeinrichtung (3) bogenförmig gekrümmt ist.

7. Metallische Flachdichtung gemäß Anspruch 5,
dadurch **gekennzeichnet**,
daß der Randbereich (11) der Abstützeinrichtung (3) so abgewinkelt ist, daß er im wesentlichen parallel zur Dichtungsebene verläuft.

8. Metallische Flachdichtung gemäß einem der Ansprüche 1 bis 7,
dadurch **gekennzeichnet,**
daß sich zwischen Abstützeinrichtung (3) und Sicke (4) ein im wesentlichen ebener Abschnitt (5) befindet.

9. Metallische Flachdichtung gemäß einem der Ansprüche 1 bis 8,
dadurch **gekennzeichnet**,
daß die Sicke (4) eckig ist.

10. Metallische Flachdichtung gemäß einem der Ansprüche 1 bis 9,
dadurch **gekennzeichnet,**
daß die Sicke (4) asymmetrisch geformt ist.

11. Metallische Flachdichtung gemäß einem der Ansprüche 1 bis 10,
dadurch **gekennzeichnet**,
daß es sich um eine Mehrlagendichtung handelt.

12. Metallische Flachdichtung gemäß Anspruch 11,
dadurch **gekennzeichnet**,
daß parallel zu einer ersten Dichtungslage (2) mit Abstützeinrichtung (3) und Sicke (4) wenigstens eine weitere Dichtungslage mit Abstützeinrichtung und Sikke auflaminiert ist.

13. Metallische Flachdichtung gemäß Anspruch 12,
dadurch **gekennzeichnet**,
daß spiegelbildlich zu einer ersten Dichtungslage (2) mit Abstützeinrichtung (3) und Sicke (4) eine weitere Dichtungslage (2') mit Abstützeinrichtung (3') und Sicke (4') angeordnet ist.

14. Metallische Flachdichtung gemäß einem der Ansprüche 1 bis 13,
dadurch **gekennzeichnet**,
daß Abstützeinrichtung (3, 3') und/oder Sicke (4, 4') in Umfangsrichtung höhen- und/oder breitenprofiliert sind.

15. Metallische Flachdichtung gemäß einem der Ansprüche 1 bis 14,
dadurch **gekennzeichnet**,
daß der von der Sickenwölbung umschlossene Bereich der Sicke (4, 4') und/oder der von Sickenflanke und Abstützeinrichtung (3, 3') begrenzte Bereich mit einem verformbaren Material (10) ganz oder teilweise angefüllt ist.

16. Metallische Flachdichtung gemäß Anspruch 15,
dadurch **gekennzeichnet**,
daß das verformbare Material (10) ein Elastomer, ein metallisches Material oder ein federelastisches Material ist.

17. Metallische Flachdichtung gemäß einem der Ansprüche 1 bis 16,
dadurch **gekennzeichnet**,
daß zumindest ihre nach außen weisenden Oberflächen ganz oder teilweise beschichtet sind.

18. Metallische Flachdichtung gemäß Anspruch 17,
dadurch **gekennzeichnet**,
daß die Flächen, welche mit den abzudichtenden Gegenflächen in Kontakt kommen, beschichtet sind.

19. Metallische Flachdichtung gemäß einem der Ansprüche 1 bis 18,
dadurch **gekennzeichnet**,
daß der Funktionsbereich, welcher Abstützeinrichtung(en) (3, 3') und Sicke(n) (4, 4') umfaßt, als Einlageteil (1') und insbesondere als Einlagering ausgebildet ist, welcher in eine entsprechende Ausnehmung im restlichen Dichtungskörper eingesetzt ist.

20. Metallische Flachdichtung gemäß einem der Ansprüche 1 bis 19, nämlich Zylinderkopfdichtung oder Auspuffdichtung.

21. Metallische Flachdichtung, nämlich Zylinderkopfdichtung gemäß Anspruch 20,
dadurch **gekennzeichnet,**
daß die Abstützeinrichtung (3, 3') eine Breite von 0,5 bis 4 mm und insbesondere von 1,5 bis 3 mm besitzt.

22. Verfahren zur Herstellung einer metallischen Flachdichtung (1) gemäß einem der Ansprüche 2 bis 21,
dadurch **gekennzeichnet,**
daß die Blechlage (2, 2') im Bereich der Abstützeinrichtung (3, 3') durch Anstauchen des Dichtungsrandes im Bereich der Durchgangsöffnung (6) vor dem Aufbiegen des Dichtungsrandes verdickt wird.
